# FASCICULE DE BREVET EUROPEEN

(11) **EP 1 088 213 B1**
(45) Date de publication et mention de la délivrance du brevet: **31.03.2004**
(21) Numéro de dépôt: 99917727.2
(22) Date de dépôt: 10.05.1999
(51) Int. Cl.: G01N 3/00, G01N 3/06, G01N 3/08

(54) **PROCEDE DE MESURE DE L'OUVERTURE DES LEVRES D'UNE FISSURE CONCOMITANTE A SA CROISSANCE, ET DISPOSITIF POUR SA MISE EN OEUVRE**
VERFAHREN UND VORRICHTUNG ZUR MESSUNG DER ÖFFNUNG DER LIPPEN EINES SPRUNGES GLEICHZEITIG MIT SEINEM WACHSTUM
METHOD FOR MEASURING THE OPENING OF THE LIPS OF A CRACK SIMULTANEOUSLY WITH ITS GROWTH, FOR IMPLEMENTING DEVICE

(30) Priorité: 18.05.1998 CH 108898
(43) Date de publication de la demande: 04.04.2001
(73) Titulaire: Walter + Bai AG, 8224 Löhnigen (CH)
(72) Inventeur: Diserens, Raymond, 1025 Saint-Sulpice (CH)
(74) Mandataire: Groner, Manfred
(86) Numéro de dépôt international: PCT/CH1999/000193
(87) Numéro de publication internationale: WO 1999/060374

(56) Documents cités:
- EP-A1- 0 356 563
- DE-A1- 2 745 244

## Description

La présente invention concerne un procédé de mesure de l'ouverture des lèvres d'une fissure concomitante à sa croissance, et du dispositif pour sa mise en oeuvre.

En mécanique de la rupture, il est capital de pouvoir mesurer en temps réel l'ouverture des lèvres d'une fissure.

Dans le cadre des essais usuels où la vitesse de déformation imposée à l'éprouvette est faible (ε̇ ≤ 10⁻⁵(s⁻¹)), on observe que la différence de temps (Δt) entre la mesure effective de l'ouverture des lèvres de la fissure et sa croissance réelle peut être considérée relativement au temps de rupture, comme négligeable. Il n'en est plus de même dans les essais à grande vitesse de déformation (ε̇ > 10⁻⁵(s⁻¹)) et par chocs (résilience ε̇ ≤ 10(s⁻¹)) où les mesures effectuées, quand elles sont possibles, montrent un écart de temps (Δt) tellement conséquent - relativement au temps de rupture - qu'il n'est plus possible de considérer, comme précédemment, qu'il y a eu simultanéité entre l'extension de la fissure et sa mesure effective par l'ouverture des lèvres de celle-ci.

L'invention, telle que définie à la revendication 1, permet, par voie optique, une mesure de l'ouverture des lèvres de la fissure concomitante à sa progression quelles que soient la vitesse de déformation et la température de l'éprouvette.

L'invention sera mieux comprise à la lecture de la description de réalisation, donnée à titre d'exemple, en regard des dessins sur lesquels:

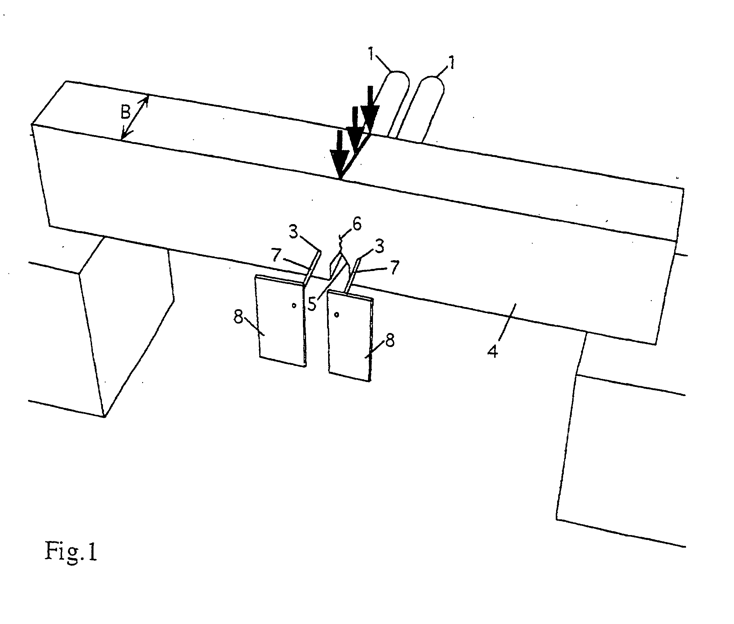

- la figure 1 représente une vue générale d'un dispositif selon l'invention

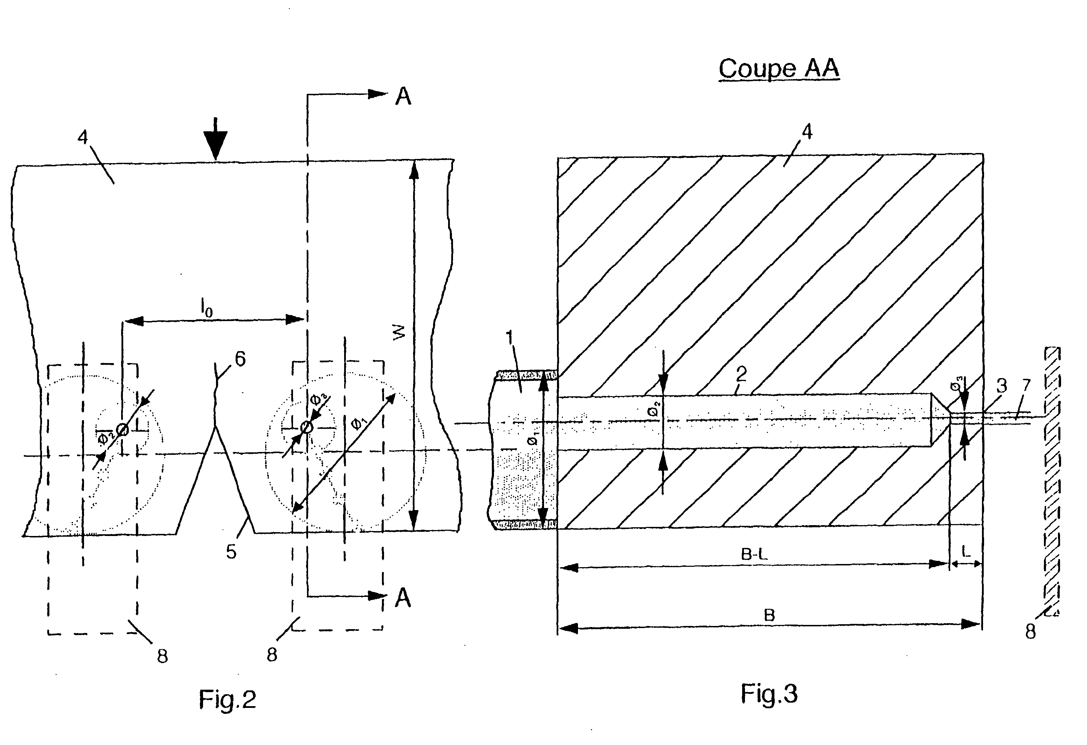

- la figure 2 représente une vue de face partielle d'une éprouvette 4 nécessaire au dispositif. On observe en pointillé le mouvement figuré des diverses positions que prendront les trous 3 empruntés par les faisceaux lumineux sortants 7 selon l'ouverture des lèvres de la fissure 6 durant son extension.
- la figure 3 représente une coupe transversale de l'éprouvette 4 au droit du trou 3 de passage du faisceau lumineux sortant 7.

En référence à ces dessins, le dispositif se compose d'une éprouvette 4 entaillée 5 par usinage et préfissurée 6. A égale distance et de part et d'autre du sommet de l'entaille mécanique 5 qui est à l'origine de la fissure 6, sont usinés des trous 3 de faibles diamètres (au maximum 1mm² de section) dont la longueur L dépendra en général de la résistance à l'usinage du matériau qui constitue l'éprouvette 4. En cas de nécessité, des trous préliminaires 2 de longueur B-L et d'un diamètre légèrement supérieur aux diamètres des trous 3 seront usinés.

Le trou 3 emprunté par le faisceau lumineux sortant 7, solidaire de chacune des demi-éprouvettes contiguës à la fissure 6 se déplace dans la section transversale du faisceau lumineux homogène incident 1 d'une quantité proportionnelle à l'ouverture des lèvres de la fissure 6. Le mouvement des faisceaux lumineux sortant 7 par les trous 3 est simultanément détecté et mesuré au moyen des photo-détecteurs plans bi-axiaux 8.

Les principaux avantages de l'invention proposée, par rapport à l'état actuel de la technique, sont les suivants:
- Mesure de l'ouverture des lèvres d'une fissure, concomitante à sa croissance
- Mesure en temps réel de l'ouverture des lèvres d'une fissure quelles que soient:
   - la vitesse de déformation de l'éprouvette
   - la nature des efforts appliqués à l'éprouvette (statiques, dynamiques, chocs, etc..)
   - la température d'essai du matériau qui constitue l'éprouvette

Le domaine principalement intéressé par l'invention est celui de la mécanique de la rupture tels que, par exemple, l'essai de résilience au mouton pendule instrumenté (chocs), les essais de traction et de flexion, les essais de fatigue élastique et oligocyclique, l'étude et la mesure de la propagation d'une fissure quelque soit la température d'essai du matériau, etc...

## Revendications

1. Procédé de mesure de l'ouverture des lèvres d'une fissure (6) concomitante à sa croissance, **caractérisé en ce qu'**on réalise au moins deux trous (3) traversant l'épaisseur (B) d'une éprouvette (4) de part et d'autre du chemin de propagation de la fissure (6) par lesquels on projette une partie d'un faisceau lumineux homogène incident (1), intercepté par des photo-détecteurs plans bi-axiaux (8) permettant l'enregistrement et la mesure du mouvement des faisceaux lumineux (7) sortant par chacun des trous (3) et qui se déplacent dans la section transversale du faisceau lumineux homogène incident (1) durant la période de l'essai.

2. Dispositif pour la mise en oeuvre du procédé selon la revendication 1, **caractérisé par** des moyens pour projeter une partie d'un ou plusieurs faisceaux lumineux homogènes incident (1) à travers au moins deux trous (3) situés dans l'éprouvette de part et d'autre de la fissure (6) et par des moyens pour réceptionner et mesurer le mouvement de la dite lumière après son passage dans les trous (3).

## Claims

1. Process for measuring the opening of the edges of a crack (6) concomitant with its growth, **characterised in that** at least two holes (3) are made, passing through the thickness (B) of a test area (4) on either side of the path of propagation of the crack (6), and part of an incident homogeneous light beam (1) is shone through said holes, intercepted by planar biaxial photodetectors (8) which make it possible to record and measure the movement of the light beams (7) emerging from each of the holes (3) and which move within the cross section of the incident homogeneous light beam (1) during the test period.

2. Apparatus for carrying out the process according to claim 1, **characterised by** means for shining part of one or more incident homogeneous light beams (1) through at least two holes (3) located in the test area on either side of the crack (6) and by means for receiving and measuring the movement of said light after it has entered the holes (3).

## Patentansprüche

1. Verfahren zum Messen der Öffnung der Kanten eines Spaltes (6) gleichzeitig mit seinem Wachstum, **dadurch gekennzeichnet, dass** wenigstens zwei Öffnungen (3) vorgesehen sind, die jeweils seitlich neben dem sich erstreckenden Spalt (6) angeordnet sind und die sich durch die Dicke eines Testbereichs (4) erstrecken, wobei ein Teil eines einfallenden homogenen Lichtstrahls (1) durch die beiden Öffnungen hindurchscheint, welche Lichtstrahlen (1) durch planare biaxiale Photodetektoren (8) unterbrochen werden, die es ermöglichen, die Bewegungen der Lichtstrahlen (7) aufzuzeichnen und zu messen, welche Lichtstrahlen (7) jeweils aus einer der beiden Öffnungen (3) austreten und sich während des Testlaufs innerhalb des Querschnitts des einfallenden homogenen Lichstrahls bewegen.

2. Vorrichtung zur Durchführung des Verfahrens nach Anspruch 1, **dadurch gekennzeichnet, dass** Mittel vorgesehen sind, mit denen ein Teil eines oder mehrerer homogener Lichtstrahlen (1) durch wenigstens zwei Öffnungen (3) hindurchführbar sind, wobei diese Öffnungen (3) seitlich zum Spalt (6) im Testbereich angeordnet sind und mit Mitteln zum Empfangen und Messen der Bewegung des Lichtes nach dem Eintritt in die Öffnungen (3).
